# EUROPEAN PATENT SPECIFICATION

(11) **EP 1 704 377 B1**
(45) Date of publication and mention of the grant of the patent: **02.01.2008**
(21) Application number: 03751541.8
(22) Date of filing: 14.10.2003
(51) Int. Cl.: F28D 9/00, F24F 12/00

(54) **HEAT EXCHANGER FOR VENTILATOR**
WÄRMETAUSCHER FÜR VENTILATOR
ECHANGEUR THERMIQUE DESTINE A UN VENTILATEUR

(43) Date of publication of application: 27.09.2006
(73) Proprietor: LG Electronics, Inc., Seoul 150-010 (KR)
(72) Inventor: CHO, Min-Chul, Busan 616-830 (KR); SHIN, Soo-Yeon, Booyoung Apt 1202-902, Kyungsangnam-Do 621-833 (KR); LEE, Seonghwan, Kyungsangnam-Do 641-711 (KR); LEE, Sung-Hwa, Changwon-Shi, Kyungsangnam-Do 641-010 (KR); KANG, Tae-Wook, Daedong Apt 605-1102, Gimhae-Shi, Kyungsangnam-Do 621-831 (KR); KANG, Gwang-Og, Kyungsangnam-Do 641-550 (KR); SONG, Chang-Hyun c/oR.L. Digital Appliance Company, Kyungsangnam-do,641-711 (KR); LEE, Ho-Beom, Busan 611-072 (KR); LEE, Kam-Gyu, Busan 614-113 (KR)
(74) Representative: Wunderlich, Rainer
(86) International application number: PCT/KR2003/002125
(87) International publication number: WO 2005/036083

(56) References cited:
- JP-A- 8 121 986

## Description

### TECHNICAL FIELD

The present invention relates to a heat exchanger for a ventilator built in the ventilator for externally discharging indoor air and internally sucking outdoor air, for exchanging heat between indoor air and outdoor air.

### BACKGROUND ART

In general, the carbon dioxide content of air increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked, what may reduce cooling efficiency. In the case that heating and ventilating operations are simultaneously performed indoors, heated indoor air is exhausted and cooled outdoor air is sucked, what may reduce heating efficiency.

Accordingly, the ventilator further includes a heat exchanger for exchanging heat between indoor air and outdoor air.

A heat exchanging element according to the preamble of claim 1 is disclosed in JP 08121986 A. JP 08121986 A describes a heat exchanging element wherein both ends of an approximate hexagonal heat transfer plate are oppositely faced to cause a primary air flow and a secondary air flow to be crossed. According to JP 08121986 A, a unit element has shielding ribs at both surfaces of a heat transfer plate and further has spacer ribs provided with linear ends and a central corrugation shape.

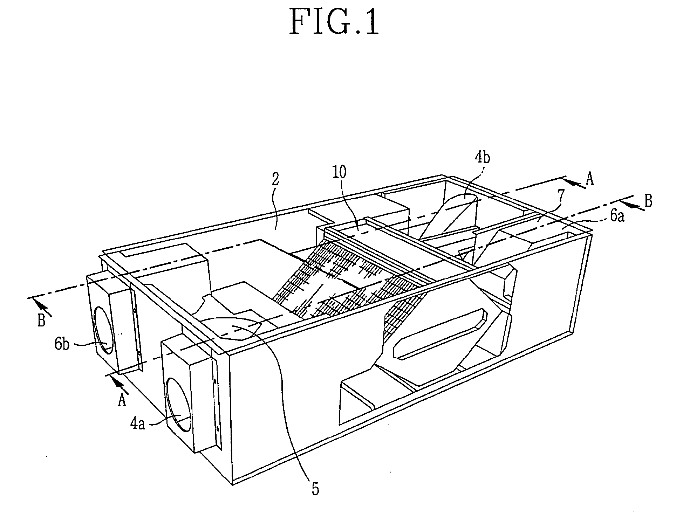

In detail, a general ventilator will now be explained with reference to Fig. 1. The ventilator is comprised of a casing 2 forming the external appearance, a heat exchanger 10 installed in the casing 2, for separately flowing indoor air and outdoor air, and exchanging heat between indoor air and outdoor air, an outdoor air suction hole 4a and an outdoor air discharge hole 4b formed respectively on the facing surfaces of the casing 2, for sucking and discharging outdoor air, an indoor air suction hole 6a and an indoor air discharge hole 6b formed respectively at one side surfaces of the outdoor air suction hole 4a and the outdoor air discharge hole 4b, for sucking and discharging indoor air, an air supply fan 8 installed inside the outdoor air discharge hole 4b for internally sucking outdoor air, an air exhaust fan 9 installed inside the indoor air discharge hole 6b for externally discharging outdoor air, and a free filter (not shown) installed inside the outdoor air suction hole 4a for removing alien substances of outdoor air such as dust.

Here, an outdoor air passage guide 5 is formed between the outdoor air suction hole 4a and the outdoor air discharge hole 4b, so that outdoor air sucked through the outdoor air suction hole 4a can be discharged to the outdoor air discharge hole 4b through the heat exchanger 10, an indoor air passage guide 7 is formed between the indoor air suction hole 6a and the indoor air discharge hole 6b, so that indoor air sucked through the indoor air suction hole 6a can be discharged to the indoor air discharge hole 6b through the heat exchanger 10, the outdoor air suction hole 4 a and the indoor air discharge hole 6 b are connected to outdoor ducts (now shown) linked to the outdoor side, and the outdoor air discharge hole 4b and the indoor air suction hole 6a are connected to indoor ducts (not shown) linked to the indoor side.

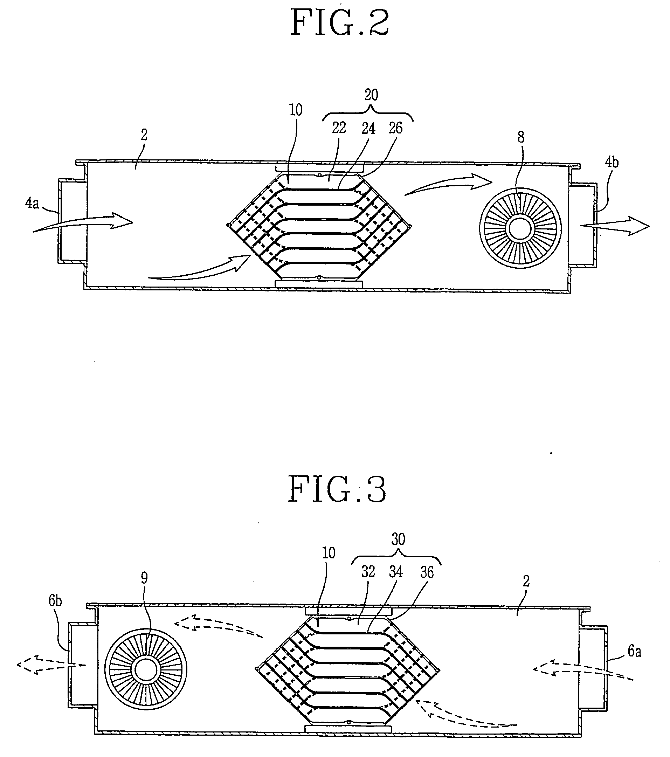

Accordingly, when the air supply fan 8 and the air exhaust fan 9 are operated, as shown in Fig. 2, outdoor air is internally sucked through the outdoor air suction hole 4a, the heat exchanger 10, the air supply fan 8 and the outdoor air discharge hole 4b, and as shown in Fig. 3, indoor air is externally discharged through the indoor air suction hole 6a, the heat exchanger 10, the air exhaust fan 9 and the indoor air discharge hole 6b. The indoor air and outdoor air flow in the heat exchanger 10 in the facing directions, to exchange heat.

In the heat exchanger 10, a plurality of heat exchange units 20 and 30 are stacked to separately flow indoor air and outdoor air, for forming crossing passages A for guiding indoor air and outdoor air to flow in the crossing directions, and facing passages B for guiding indoor air and outdoor air to flow in the facing directions.

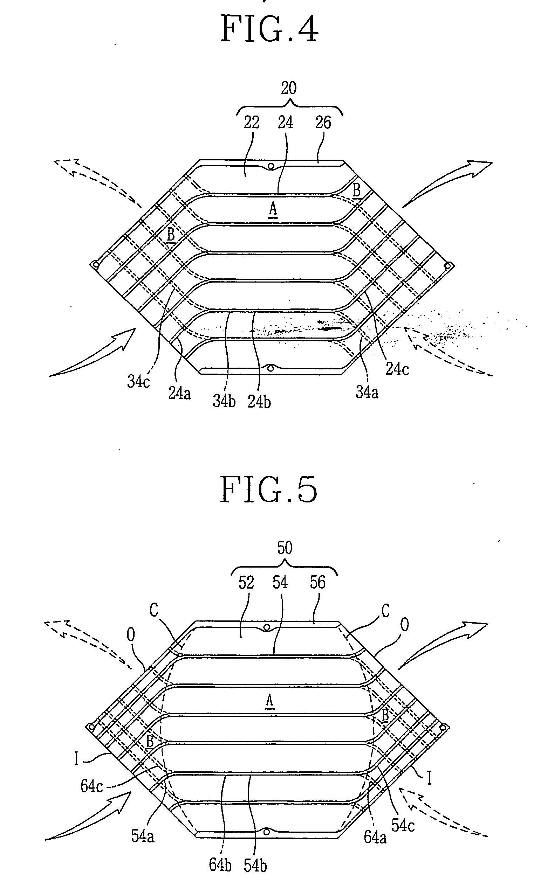

In detail, as illustrated in Fig. 4, in the heat exchange units 20 and 30, frames 26 and 36 having a plurality of guide ribs 24 and 34 are adhered to one side surfaces of heat exchange films 22 and 32. The heat exchange films 22 and 32 are formed in the hexagonal shape, center units 24b and 34b of the guide ribs 24 and 34 are formed in the straight line shape to be level with one side facing ends of the heat exchange films 22 and 32, and both end units 24a, 24c, 34a and 34c of the guide ribs 24 and 34 are formed in the straight line shape to be level with the other side facing ends of the heat exchange films 22 and 32. The guide ribs 24 and 34 are installed in parallel to the adjacent guide ribs 24 and 34 at regular intervals.

Here, the plurality of guide ribs 24 and 34 are installed on one side surfaces of the hexagonal heat exchange films 22 and 32 to cross them from one side ends to the other side ends. Therefore, the length of the center units 24b and 34b of the guide ribs 24 and 34 is constant, but the length of the both end units 24a, 24c, 34a and 34c gradually increases or decreases.

The heat exchange units 20 and 30 are divided into first and second heat exchange units 20 and 30 according to the shape of the both end units 24a, 24c, 34a and 34c of the guide ribs 24 and 34. Inlets and outlets of the first and second heat exchange units 20 and 30 do not overlap with each other in order to form passages for separately flowing outdoor air and indoor air along the first and second heat exchange units 20 and 30.

In the first and second heat exchange units 20 and 30, the center units 24b and 34b of the guide ribs 24 and 34 are level with each other to form the facing passages A, and the both end units 24a, 24c, 34a and 34c of the guide ribs 24 and 34 are perpendicular to each other to form the crossing passages B.

Accordingly, outdoor air and indoor air are respectively sucked toward the first and second heat exchange units 20 and 30, and guided by the guide ribs 24 and 34, so that they can perpendicularly cross each other in the crossing passages B and face each other in the facing passages A, to exchange heat.

Especially, there is a big relative speed difference between indoor air and outdoor air passing through the facing passages A, and thus the heat exchanging operation is most active in the facing passages A.

In relation to this, as disclosed in Japanese Laid-Open Patent Application 08-75385 (March 19, 1996), S-shaped curved ribs are installed on hexagonal heat exchange films to form facing passages and crossing passages, so that supplied air and exhausted air can pass through the facing passages and the crossing passages to exchange heat, and as revealed by Japanese Laid-Open Patent Application 05-34089 (February 9, 1993), a plurality of curved rib groups are fixedly installed on one side surfaces of paper liners to form crossing passages at both ends and facing passages in the center units, so that two fluids can pass through the facing passages and the crossing passages to exchange heat.

Since the general heat exchanger for the ventilator mostly exchanges heat in the facing passages, heat exchange efficiency can be improved by increasing the length of the facing passages. However, the ventilator is installed in a limited space such as a ceiling or inner wall of a building, which restricts the external size of the ventilator in design and the size of the heat exchanger installed in the ventilator. As a result, there are limitations to improve heat exchange efficiency by controlling the length of the facing passages.

### DISCLOSURE OF THE INVENTION

An object of the present invention is to provide a heat exchanger for a ventilator which can maximize heat exchange efficiency between supplied air and exhausted air in a fixed size.

In order to achieve the above-described object of the invention, there is provided a heat exchanger for a ventilator including first and second heat exchange units having a plurality of guide ribs on one side surfaces of heat exchange films, for separately flowing supplied air and exhausted air, the first and second heat exchange units being stacked to form crossing passages at their both ends and facing passages between the crossing passages, for exchanging heat between supplied air and exhausted air, guide ribs for forming the facing passages longer in the centers of the heat exchange films being installed in each of the first and second heat exchange units.

According to one aspect of the invention, the heat exchange films are formed in the hexagonal shape, the center units of the guide ribs forming the facing passages are level with one side facing ends of the heat exchange films, and both end units of the guide ribs forming the crossing passages are level with the other side facing ends of the heat exchange films.

According to another aspect of the invention, guide ribs having their center units gradually lengthened toward the centers of the heat exchange films are installed in the first and second heat exchange units, and guide ribs in which assumed curved lines connecting ends of the center units have a predetermined radius of curvature are installed in the first and second heat exchange units.

According to yet another aspect of the invention, the plurality of guide ribs are installed in parallel at regular intervals in the first and second heat exchange units, and the first and second heat exchange units are alternately stacked.

According to yet another aspect of the invention, in the first and second heat exchange units, the crossing passages perpendicularly cross each other, and the facing passages are level with each other.

### BRIEF DESCRIPTION OF THE DRAWINGS

The present invention will become better understood with reference to the accompanying drawings which are given only by way of illustration and thus are not limitative of the present invention, wherein:
Fig. 1 is a perspective view illustrating an inside structure of a general ventilator;
Fig. 2 is a cross-sectional view taken along line A-A of Fig. 1;
Fig. 3 is a cross-sectional view taken along line B-B of Fig. 1;
Fig. 4 is a view illustrating air flowing in a heat exchanger for the ventilator;
Fig. 5 is a view illustrating air flowing in a heat exchanger for a ventilator in accordance with the present invention; and
Fig. 6 is a perspective view illustrating the heat exchanger for the ventilator in accordance with the present invention.

### BEST MODE FOR CARRYING OUT THE INVENTION

A heat exchanger for a ventilator in accordance with the present invention will now be described in detail with reference to the accompanying drawings.

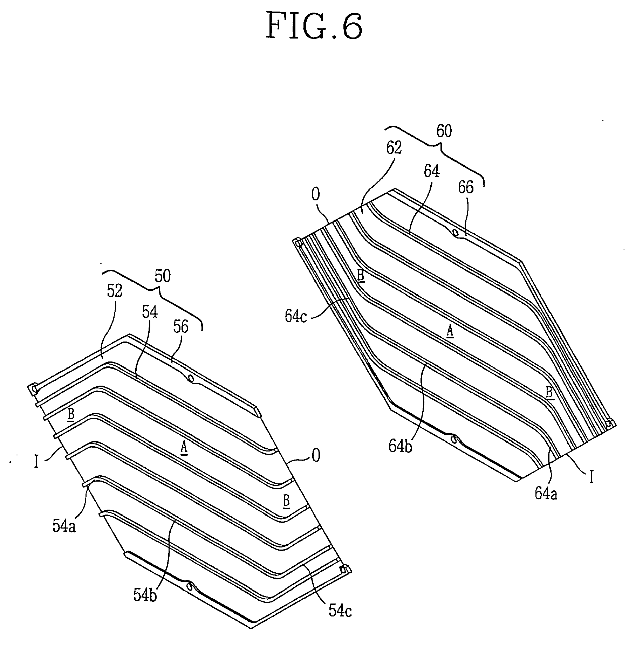

Referring to Figs. 5 and 6, the heat exchanger for the ventilator includes a first heat exchange unit 50 for guiding flowing of outdoor air, and a second heat exchange unit 60 for guiding flowing of indoor air. The first and second heat exchange units 50 and 60 are alternately stacked for separately flowing outdoor air and indoor air through different passages, and exchanging heat between outdoor air and indoor air.

In the first and second heat exchange units 50 and 60, frames 56 and 66 including a plurality of guide ribs 54 and 64 are adhered to one side surfaces of heat exchange films 52 and 62, and facing passages A for guiding outdoor air and indoor air to flow in the facing directions and crossing passages B for guiding outdoor air and indoor air to flow in the crossing directions are formed.

Especially, a relative flowing speed between outdoor air and indoor air is highest in the facing passages A. Accordingly, the heat exchange operation is most actively performed in the facing passages A. In order to improve heat exchange efficiency, the facing passages A are lengthened in the centers of the heat exchange films 52 and 62.

In detail, the heat exchange films 52 and 62 are formed in the hexagonal shape, the guide ribs 54 and 64 are curved to lengthen the passages of outdoor air and indoor air, center units 54b and 64b of the guide ribs 54 and 64 forming the facing passages A are formed to be level with one side facing ends of the heat exchange films 52 and 62, both end units 54a, 54c, 64a and 64c of the guide ribs 54 and 64 forming the crossing passages B are formed to be level with the other side facing ends of the heat exchange films 52 and 62, and the frames 56 and 66 are fixed to the both side ends of the heat exchange films 52 and 62 excluding inlet I and outlet O sides.

Here, the guide ribs 54 and 64 are installed to cross the inlets I and outlets O of the heat exchange films 52 and 62, and level with the adjacent guide ribs 54 and 64 at regular intervals. Therefore, the plurality of guide ribs 54 and 64 are formed differently according to the installation positions of the heat exchange films 52 and 62.

Especially, when the guide ribs 54 and 64 are installed in the centers of the heat exchange films 52 and 62, their center units 54b and 64b are gradually lengthened. In detail, assumed curved lines C connecting the ends of the center units 54b and 64b have a predetermined radius of curvature.

The radius of curvature is determined according to the size of the heat exchange films 52 and 62 and the guide ribs 54 and 64, the interval between the guide ribs 54 and 64, and the average supply/exhaust amount of outdoor air and indoor air.

That is, the guide ribs 54 and 64 having their center units 54b and 64b gradually lengthened toward the centers of the heat exchange films 52 and 62 are installed in the first and second heat exchange units 50 and 60. Because the facing passages A for actively exchanging heat between outdoor air and indoor air are lengthened, heat exchange efficiency between outdoor air and indoor air can be improved.

On the other hand, the first and second heat exchange units 50 and 60 are alternately stacked, and the frames 56 and 66 are connected to each other. Here, the crossing passages B perpendicularly cross each other and the facing passages A are level with each other so that the inlet I and outlet O of the first heat exchange unit 50 and the inlet I and outlet O of the second heat exchange unit 60 cannot overlap with each other.

Accordingly, outdoor air and indoor air passing through the first and second heat exchange units 50 and 60 flow in the crossing directions in the crossing passages B, and the facing directions in the facing passages A, to exchange heat.

Here, outdoor air and indoor air passing through the facing passages A flow in the facing directions, and thus a relative speed between outdoor air and indoor air is highest in the facing passages A. Thus, the heat exchange operation between outdoor air and indoor air can be most actively performed.

The operation of the heat exchanger for the ventilator in accordance with the present invention will now be explained in detail.

The first and second heat exchange units 50 and 60 are manufactured by adhering the frames 56 and 66 including the plurality of guide ribs 54 and 64 to one side surfaces of the heat exchange films 52 and 62. The first and second heat exchange units 50 and 60 are alternately stacked so that the inlet I and outlet O of the heat exchange film of the first heat exchange unit 50 cannot overlap with the inlet I and outlet O of the heat exchange film of the second heat exchange unit 60. The frames 56 and 66 are connected to each other by adhesion or assembling, thereby finishing manufacturing of the heat exchanger for the ventilator.

The heat exchanger makes outdoor air and indoor air flow through different passages by the operation of an adjacent air supply fan and air exhaust fan, and exchanges heat between outdoor air and indoor air.

In detail, outdoor air blown by the air supply fan is internally sucked through the first heat exchange unit 50, and indoor air blown by the air exhaust fan is externally discharged through the second heat exchange unit 60. When outdoor air and indoor air respectively pass through the crossing passages B and the facing passages A of the first and second heat exchange units 50 and 60, the heat exchange operation is performed.

Here, when a cooling operation is performed indoors, the heat exchange operation between outdoor air and indoor air is executed to cool outdoor air by indoor air, and when a heating operation is performed indoors, the heat exchange operation is executed to heat outdoor air by indoor air.

Especially, in the crossing passages B, the heat exchange operation is performed by flowing outdoor air and indoor air in the perpendicular directions, and in the facing passages A, the heat exchange operation is performed by flowing outdoor air and indoor air in the facing directions. Because a relative flowing speed between outdoor air and indoor air is higher in the facing passages A, the heat exchange operation is most active in the facing passages A.

Moreover, in the first and second heat exchange units 50 and 60, the center units 54b and 64b of the guide ribs 54 and 64 forming the facing passages A are lengthened toward the centers of the heat exchange films 52 and 62, and thus the facing passages A for actively performing the heat exchange operation are more lengthened than the crossing passages B, to remarkably improve heat exchange efficiency.

## Claims

1. A heat exchanger for a ventilator comprising first and second heat exchange units (50, 60) having a plurality of guide ribs (54, 64) on one side surface of heat exchange films (52, 62), for separately flowing supplied air and exhausted air, the first and second heat exchange units (50, 60) being stacked to form crossing passages (B) at their both ends and facing passages (A) between the crossing passages (B), for exchanging heat between supplied air and exhausted air, the guide ribs (54, 64) for forming the facing passages (A) being installed in each of the first and second heat exchange units (50, 60),
**characterized in that**
the facing passages (A) are lengthened toward the centers of the heat exchange films (52, 62).

2. The heat exchanger of claim 1, wherein the heat exchange films (52, 62) are formed in the hexagonal shape.

3. The heat exchanger of claim 2, wherein the center units (54b, 64b) of the guide ribs (54, 64) forming the facing passages (A) are level with one side facing ends of the heat exchange films (52, 62).

4. The heat exchanger of claim 3, wherein both end units (54a, 54c, 64a, 64c) of the guide ribs (54, 64) forming the crossing passages are level with the other side facing ends of the heat exchange films (52, 62).

5. The heat exchanger of claim 4, wherein guide ribs (54, 64) having their center units (54b, 64b) gradually lengthened toward the centers of the heat exchange films (52, 62) are installed in the first and second heat exchange units (50, 60).

6. The heat exchanger of claim 5, wherein guide ribs (54, 64) in which assumed curved lines connecting ends of the center units (54b, 64b) have a predetermined radius of curvature are installed in the first and second heat exchange units (50, 60).

7. The heat exchanger of one of claims 1 to 6, wherein the plurality of guide ribs (54, 64) are installed in parallel at regular intervals in the first and second heat exchange units (50, 60).

8. The heat exchanger of one of claims 1 to 6, wherein the first and second heat exchange units (50, 60) are alternately stacked.

9. The heat exchanger of one of claims 1 to 6, wherein, in the first and second heat exchange units (50, 60), the crossing passages (B) perpendicularly cross each other, and the facing passages (A) are level with each other.

## Patentansprüche

1. Wärmetauscher für einen Ventilator mit ersten und zweiten Wärmetauscheinheiten (50, 60) mit einer Vielzahl von Führungsrippen (54, 64) auf einer Seitenoberfläche von Wärmetauschschichten (52, 62) zum separaten Fließen von Zuluft und Abluft, wobei die ersten und zweiten Wärmetauscheinheiten (50, 60) gestapelt sind, um sich kreuzende Durchlässe (B) an ihren beiden Enden und gegenüberliegende Durchlässe (A) zwischen den sich kreuzenden Durchlässen (B) zu bilden, um Wärme zwischen Zuluft und Abluft zu tauschen, wobei die Führungsrippen (54, 64) zum Bilden der gegenüberliegende Durchlässe (A) in jeder der ersten und zweiten Wärmetauscheinheiten (50, 60) eingebaut sind,
**dadurch gekennzeichnet,**
**dass** die gegenüberliegenden Durchlässe (A) zur Mitte der Wärmetauschschichten (52, 62) hin gestreckt sind.

2. Wärmetauscher nach Anspruch 1,
**dadurch gekennzeichnet,**
**dass** die Wärmetauschschichten (52, 62) in hexagonaler Form gebildet sind.

3. Wärmetauscher nach Anspruch 2,
**dadurch gekennzeichnet,**
**dass** die Mitteneinheiten (54b, 64b) der Führungsrippen (54, 64), welche die gegenüberliegenden Durchlässe (A) bilden, auf gleicher Höhe mit einer zugewandten Endseite der Wärmetauschschichten (52, 62) liegen.

4. Wärmetauscher nach Anspruch 3,
**dadurch gekennzeichnet,**
**dass** beide Endeinheiten (54a, 54c, 64a, 64c) der Führungsrippen (54, 64), welche die sich kreuzenden Durchlässe bilden, auf gleicher Höhe mit der anderen zugewandten Endseite der Wärmetauschschichten (52, 62) liegen.

5. Wärmetauscher nach Anspruch 4,
**dadurch gekennzeichnet,**
**dass** die Führungsrippen (54, 64), deren Mitteneinheiten (54b, 64b) allmählich zur Mitte der Wärmeaustauschschichten (52, 62) hin gestreckt sind, in den ersten und zweiten Wärmeaustauscheinheiten (50, 60) angebracht sind.

6. Wärmetauscher nach Anspruch 5,
**dadurch gekennzeichnet,**
**dass** die Führungsrippen (54, 64), bei denen angenommene gekrümmte Linien, welche die Enden der Mitteneinheiten (54b, 64b) verbinden, einen vorgegebenen Krümmungsradius besitzen, in den ersten und zweiten Wärmetauscheinheiten (50, 60) angebracht sind.

7. Wärmetauscher nach einem der Ansprüche 1 bis 6,
**dadurch gekennzeichnet,**
**dass** die Vielzahl der Führungsrippen (54, 64) parallel mit regelmäßigen Abständen in den ersten und zweiten Wärmetauscheinheiten (50, 60) eingebaut sind.

8. Wärmetauscher nach einem der Ansprüche 1 bis 6,
**dadurch gekennzeichnet,**
**dass** die ersten und zweiten Wärmetauscheinheiten (50, 60) abwechselnd gestapelt sind.

9. Wärmetauscher nach einem der Ansprüche 1 bis 6,
**dadurch gekennzeichnet,**
**dass** in den ersten und zweiten Wärmetauscheinheiten (50, 60) die sich kreuzende Durchlässe (B) sich orthogonal kreuzen, und die gegenüberliegenden Durchlässe (A) auf gleicher Höhe miteinander sind.

## Revendications

1. Échangeur de chaleur pour un ventilateur comprenant une première et une deuxième unités d'échange thermique (50, 60) ayant une pluralité de membrures de guidage (54, 64) sur une surface latérale de films d'échange thermique (52, 62), pour l'écoulement séparé d'air d'alimentation et d'air d'échappement, la première et la deuxième unités d'échange thermique (50, 60) étant superposées de manière à former des passages croisés (B) à leurs deux extrémités et des passages en vis-à-vis (A) entre les passages croisés (B), pour échanger de la chaleur entre l'air d'alimentation et l'air d'échappement, les membrures de guidage (54, 64) destinées à former les passages en vis-à-vis (A) étant installées dans chacune de la première et la deuxième unités d'échange thermique (50, 60),
***caractérisé en ce que***
les passages en vis-à-vis (A) sont rallongés vers les centres des films d'échange thermique (52, 62).

2. Échangeur de chaleur selon la revendication 1, dans lequel les films d'échange thermique (52, 62) sont réalisés de forme hexagonale.

3. Échangeur de chaleur selon la revendication 2, dans lequel les unités centrales (54b ; 64b) des membrures de guidage (54, 64) formant les passages en vis-à-vis (A) sont de niveau avec un côté d'extrémité en vis-à-vis des films d'échange thermique (52, 62).

4. Échangeur de chaleur selon la revendication 3, dans lequel les deux unités d'extrémité (54a, 54c, 64a, 64c) des membrures de guidage (54, 64) formant les passages croisés sont de niveau avec l'autre côté d'extrémité en vis-à-vis des films d'échange thermique (52, 62).

5. Échangeur de chaleur selon la revendication 4, dans lequel des membrures de guidage (54, 64) ayant leurs unités centrales (54b, 64b) rallongées progressivement vers les centres des films d'échange thermique (52, 62) sont installées dans la première et la deuxième unités d'échange thermique (50, 60).

6. Échangeur de chaleur selon la revendication 5, dans lequel des membrures de guidage (54, 64), dans lesquelles des lignes courbes fictives reliant des extrémités des unités centrales (54b, 64b) ont un rayon de courbure prédéterminé, sont installées dans la première et la deuxième unités d'échange thermique (50, 60).

7. Échangeur de chaleur selon l'une des revendications 1 à 6, dans lequel la pluralité de membrures de guidage (54, 64) sont installées en parallèle à intervalles réguliers dans la première et la deuxième unités d'échange thermique (50, 60).

8. Échangeur de chaleur selon l'une des revendications 1 à 6, dans lequel la première et la deuxième unités d'échange thermique (50, 60) sont empilées de manière alternée.

9. Échangeur de chaleur selon l'une des revendications 1 à 6, dans lequel, dans la première et la deuxième unités d'échange thermique (50, 60), les passages croisés (B) se croisent perpendiculairement et les passages en vis-à-vis (A) sont de niveau les uns avec les autres.
